# EUROPEAN PATENT APPLICATION

(11) **EP 2 403 297 A1**
(43) Date of publication of application: **04.01.2012**
(21) Application number: 10290352.3
(22) Date of filing: 30.06.2010
(51) Int. Cl.: H04W 48/12

(54) **Method for transmitting a pilot sequence, relaying node of a cellular communication network, and base station of a cellular communication network**

(71) Applicant: Alcatel Lucent, 75008 Paris (FR)
(72) Inventor: Braun, Volker Dr., 70176 Stuttgart (DE)
(74) Representative: Dreiss

(57) **Abstract**

The present invention refers to Method (101) for transmitting (111) at least one pilot sequence (79) over a radio communication link (25) of a radio cell (15) of a cellular communication network (11) from a relaying node (21). The relaying node (21) is assigned to a base station (17) of the cell (15), radio resources (53) of the link (25) are subdivided with respect to frequency (f) and time (t) into multiple resource elements (65), one or more of said resource elements (65) being assigned to a control channel of the link (25). In order to provide a method which allows that a terminal can discover one or more relay nodes (21) possibly present in a certain radio cell (15) and perform link quality measurements, it is suggested that the method (101) comprises: selecting (109) at least one of said resource element (71) assigned to said control channel as a selected resource element (81) for transmitting said one pilot sequence and transmitting (111) the pilot sequence within the at least one selected resource element (81) .

## Description

### Field of the Invention

The present invention refers to a method for transmitting at least one pilot sequence over a radio communication link of a radio cell of a cellular communication network. Furthermore, the present invention refers to a relaying node of a cellular communication network and a base station of a cellular communication network.

### State of the Art

Cellular radio communication networks having at least one relaying node assigned to base station of a cell of the cellular network are known in the art. When operating such a cellular communication network, the base station may send data to the relaying node instead of transmitting the data directly to a terminal residing within radio cell. The relaying node then forwards the data to the terminal. Accordingly, the relaying node may receive data from the terminal and forward the received data to the base station.

### Summary

An object of the present invention consists in providing a method which allows that a terminal can discover one or more relay nodes possibly present in a certain radio cell. It is furthermore desirable to allow for measurements of a link quality of a link between the relay node and the terminal and/or to estimate a channel between the relay node and the terminal.

According to a preferred embodiment of the present invention, a method for transmitting at least one pilot sequence over a radio communication link of a radio cell of a cellular communication network from a relaying node assigned to a base station of the cell, radio resources of the link being subdivided with respect to frequency and time into multiple resource elements is suggested, one or more of said resource elements being assigned to a control channel of the link, wherein the method comprises: selecting at least one of said resource element assigned to said control channel as a selected resource element for transmitting said one pilot sequence and transmitting the pilot sequence within the at least one selected resource element.

In a preferred embodiment, the transmission resources are subdivided according a Orthogonal Frequency Division Multiplexing (OFDM) scheme. Multiple OFDM symbols are transmitted one after another with respect to time. The radio resources are subdivided into multiple consecutive subcarriers with respect to frequency. Each OFDM symbol is subdivided into multiple resource elements and each resource element occupies a single subcarrier.

Preferably, the method is executed by the relaying node, i. e. the method is a method for operating a relaying node. In an embodiment, the relaying node is arranged for receiving data from the base station and forwarding this data received from the base station to a terminal of the network and/or for receiving data from the terminal and forwarding this data received from the terminal to the base station.

Transmitting the pilot sequence within the resource elements assigned to the control channel allows to discover the relaying node. A terminal may listen for the pilot sequence transmitted within the selected resource elements, analyze the received sequence, and decide depending on the analyzing whether one or more relaying nodes are present in the cell. Furthermore, the terminal may measure a link quality between the relaying node and the terminal. In addition, a channel between the relaying node and the terminal may be estimated by analyzing the pilot sequence transmitted by the relaying node. In some embodiments, the resource elements assigned to the control channel are distributed more or less uniformly in a pseudo-random manner within the spectrum of the radio communication link. In other words, the resource elements assigned to the control channel are arranged in a frequency-divers manner within the spectrum of the communication link. Thus, selecting merely those resource elements that are assigned to the control channel allows for reliably measure the link quality and/or estimate the channel between the relaying node and the terminal.

In a preferred embodiment, multiple resource elements form a control channel element assigned to the control channel and the resource elements of the control channel element are selected for transmitting the pilot sequence. Preferably, a control channel element comprises one or more consecutive OFDM symbols.

In an embodiment, a control channel element is subdivided into multiple resource element groups, each resource element group having multiple resource elements, wherein at least one specific resource element of the resource element group is selected for transmitting the pilot sequence. Preferably, all resource elements of a single resource element group are sent simultaneously, wherein each resource element corresponds to a different frequency range. When using OFDM, all resource elements of a single resource group reside within the same OFDM symbol. This allows for transmitting multiple pilot sequences by assigning a specific resource element of the resource group to a certain pilot sequence. For example, if a resource group has four resource elements then four different pilot sequences originating from different relaying nodes or from different antennas of a single relaying node may be transmitted to one or more terminals.

In another embodiment, the transmission resources of the link are further subdivided with respect to space, the method comprises transmitting multiple pilot sequences simultaneously in the same frequency range, preferably using the same subcarrier, wherein transmitting of one pilot sequence comprises multiplying the pilot sequence with a code sequence that is specific to the pilot sequence, wherein the code sequences differ from each other so that the simultaneously transmitted pilot sequences are at least substantially orthogonal with respect to each other. Preferably the code sequences are Hadamard code sequences and each pilot sequence is multiplied with a different Hadamard sequence. The pilot sequence and/or the code sequence may be specific to an antenna of the relaying node. Furthermore, a different operation than multiplying may be applied for combining the code sequence with the pilot sequence. Different pilot sequences that are at least substantially orthogonal (i. e. orthogonal or quasi orthogonal) may be generated by multiplying them with a spreading sequence. Alternatively, the pilot sequences may be generated by allocating a set of quasi orthogonal sequences of a different type than Hadamard codes. In an embodiment, Zadoff-Chu sequences are applied in order to generate multiple pilot sequences that are at least substantially orthogonal to each other. In particular, different root values and/or different cyclic shifts can be applied for allocating a zadoff-Chu sequence that is specific to a given pilot sequence. The pilot sequence is then generated based on this specific Zadoff-Chu sequence.

In another embodiment, the method comprises transmitting multiple pilot sequences, wherein the control channel comprises multiple control channel elements and the resource elements of a specific control channel element are selected for transmission of one of said multiple pilot sequences. In this embodiment, multiple control channel elements are aggregated so that a comparatively large number of bits are available for providing robust and reliable transmission of a piece of control data from the base station to the terminal. However, if a group of aggregated control channel elements is selected for transmitting the pilot sequence then each control channel element of this group is selected for transmitting a different pilot sequence originating from different relaying nodes and/or different antennas of the same relaying node.

According to preferred embodiment, the resource elements are selected for transmission of the pilot sequence according to a transmission time of the resource element. This allows for multiplexing multiple pilot sequences in the time domain.

According to another preferred embodiment, the method comprises scrambling the pilot sequence, the scrambling being specific to the radio cell and/or the relaying node.

In an embodiment, the method comprises receiving signaling information signaled by the base station to the relating node, determining a cell configuration based on the received signaling information and selecting resource elements for transmitting the pilot sequence according to the cell configuration. The signaling information may or may not be transmitted from the base station to the relaying node by means of a higher layer control or management protocol.

The cell configuration may comprise resource assignment information so that the base station may control which resource elements must be used by the relaying node for transmitting the pilot sequence. Therefore, the base station can change the cell configuration, in particular the resource elements used for the transmission of the pilot sequences, according to momentary radio conditions or load conditions of the cell. The selecting of the at least one resource element for transmitting the pilot sequence depends on the signaling by the base station.

In another embodiment, the cell configuration may further comprise pilot sequence configuration for at least one pilot sequence transmitted by a relaying node. Preferably, the pilot sequence comprises pilot pattern in the form of a bit sequence specific to the relay node and/or specific to a certain antenna of the relay node. The pilot sequence configuration may indicate to the relay node which bit sequence the pilot sequence shall comprise. For example, the pilot sequence configuration may comprise the bit sequence itself or a code for specifying the bit sequence.

In another embodiment, the method comprises sending multiple pilot sequences by a single relaying node, wherein each pilot sequence is send via a different antenna of the relaying node. This allows, for example, for link quality measurements and/or channel estimating related to different radio propagation paths within a MIMO system.

According to a preferred embodiment of the present invention, the control channel corresponds to downlink channel such as a Physical Downlink Control Channel (PDCCH) of a mobile communication system, preferably the Long Term Evolution (LTE) system specified by the Third Generation Partnership Project (3GPP).

A person skilled in the art would recognize that the method described herein can be performed by programmed computers. Herein, some embodiments are also intended to cover program storage devices, e.g., digital storage media, which are machine or computer readable and encode machine-executable or computer-executable programs of instructions, wherein said instructions perform some or all of the steps of said methods. The program storage devices may be, e.g. digital memories, magnetic storage media such as a magnetic disc and magnetic tapes, hard drives, optically readable digital data storage media, or solid state digital data storage media and devices including flash memory and programmed microcontrollers. The embodiments are also intended to cover devices for communication networks, computers, particularly a computer, processor, or controller of a control circuitry described below, programmed to perform these steps of said method.

A further preferred embodiment of the present invention refers to a relaying node of a cellular communication network, said relaying node being arranged for transmitting at least one pilot sequence over a radio communication link of a radio cell of the cellular communication network, radio resources of the link being subdivided with respect to frequency and time into multiple resource elements, and one or more of said resource elements being assigned to a control channel of the link, wherein the relaying node comprises: control circuitry that is configured for selecting at least one of said resource elements assigned to said control channel as a selected resource element for transmitting one pilot sequence and a transmitter arranged for transmitting the pilot sequence within the at least one selected resource element.

In an embodiment, the radio resources of the radio link are further subdivided with respect to space and/or the relaying node comprises multiple antennas, wherein each antenna is arranged for transmitting one pilot sequence.

In another embodiment, the control circuit is arranged, preferably programmed, for executing a method according to the present invention, preferred embodiments of which are described above.

According to preferred embodiment, a base station of a cellular communication network is provided, said network comprising a relaying node for transmitting at least one pilot sequence over a radio communication link of a radio cell of the cellular communication network, radio resources of the link being subdivided with respect to frequency and time into multiple resource elements, one or more of said resource elements being assigned to a control channel of the link, the relaying node being arranged for selecting at least one of said resource elements as a selected resource element assigned to said control channel for transmitting one pilot sequence and transmitting the pilot sequence within the at least one selected resource element, the base station comprising a transmitter for transmitting control channel data within at least some of the resource elements assigned to the control channel, wherein the transmitter is arranged for preventing transmissions of control channel data within each selected resource element or for reducing a transmission power of transmissions of control channel data within each selected resource element. In other words, in one embodiment, the base station does not occupy those control channel resource elements that are intended to be selected by a relaying node of the cell for transmitting the pilot sequence. Thus pilot sequences and control channel data, both being transmitted within resource elements assigned to the control channel, cannot collide within the radio cell. However, in another embodiment, the base station is transmitting control channel data within the selected resource elements at a reduced transmission power level compared to a power level used by the base station when transmitting control channel data within resource elements that are not selected resource elements. Typically, the relaying node and the base station are located at different places. As a consequence, terminals located near the base station can receive the control channel data. Terminals located next to a relaying node that uses the same selected resource elements for transmitting at least one pilot sequence can receive these pilot sequence. As the base station is sending the control channel date within the selected resource elements at the reduced transmission power level interference with the pilot sequence is at least essentially avoided.

According to another embodiment, the base station is arranged for sending signaling information to the relay node, the signaling information indicating to the relay node which resource elements are to be selected as selected resource elements. Furthermore, as described above, the pilot sequences may comprise bit sequences for identifying the relay node and/or an antenna of the relay node and the signaling information may further comprise information specifying said bit sequence.

### Brief description of the figures

Preferred embodiments are shown in the figures and described in detail hereinafter.
- Figure 1: shows a cellular communication network;
- Figure 2: shows the structure of radio resources of a radio communication link of a radio cell;
- Figure 3: shows a time-frequency mapping of a control channel of the radio link; and
- Figure 4: shows a flow chart of a method according to a preferred embodiment.

### Description of the embodiments

The following description and the drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

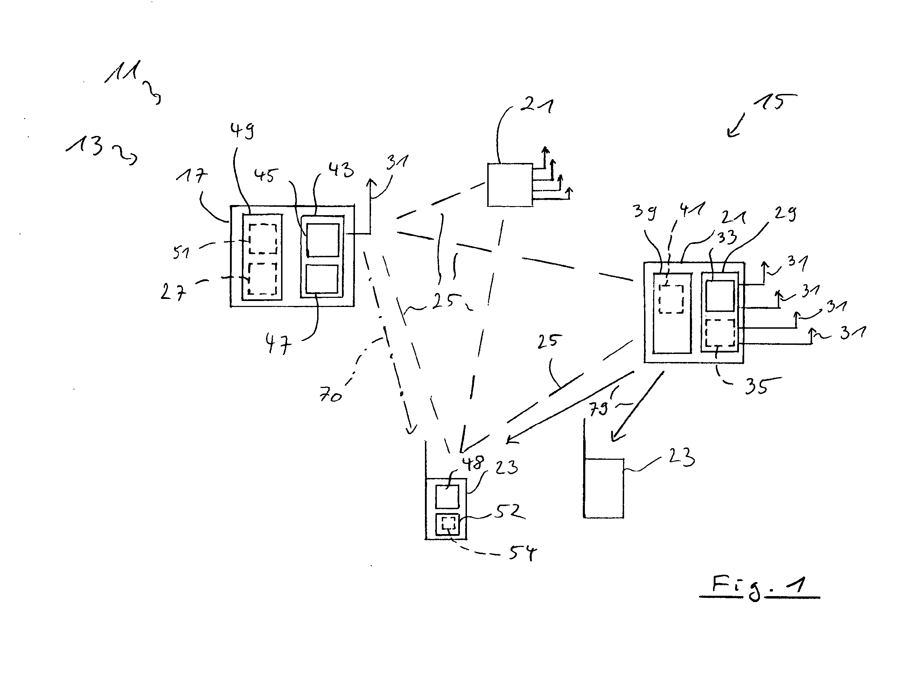

Figure 1 shows a radio access network 11, which is part of a mobile communication system 13. In the shown embodiment, the mobile communication system is the Long Term Evolution (LTE) system specified by the third generation partnership project (3GPP). Accordingly, the radio access network 11 is an LTE access network. However, the present invention is not limited to LTE. It can be applied in connection with different mobile communication systems and/or different radio access network technologies.

A radio cell 15 of the network 11 has a base station 17 - also referred to as eNodeB in LTE. Furthermore, the radio cell 15 has at least one relaying node 21 assigned to the base station 17. A mobile terminal 23 - referred to as User Equipment (UE) in LTE - residing within the radio cell 15 can communicate over a radio link 25 directly with the base station 17 and/or indirectly with the base station 17 via the relaying node 21. When the terminal 23 and the base station 17 communicate indirectly via the relating node 21 than the relaying node 21 forwards data received from the terminal 23 and destined for the base station 17 over radio link 25 to the base station 17. Accordingly, the base station 17 can send data destined for the terminal 23 indirectly via the relaying node 21 that forwards the data to the terminal 23.

The relaying node 21 is assigned to the base station 17 and therefore part of the radio cell 15 controlled by the base station 17. Thus, the relaying node 21 does not define a separate radio cell and therefore has no separate cell identification. Scheduling of radio resources of the radio link 25 is performed by a scheduler 27 of the base station 17.

As shown in figure 1, the relaying node 21 is connected to the base station 17 via the radio link 25. In particular, the relaying node 21 is an inband relaying node. I. e., radio resources for communication between the base station 17 and the relaying node 21 and radio resources for communication between the relaying node 21 and a terminal 23 are identical. As the consequence, the relaying node 21 cannot receive data from the terminal 23 and forward data to the base station 17 simultaneously. In addition, the relaying node 21 cannot receive data from the base station 17 and forward data to the terminal 23 simultaneously. In LTE, an inband relaying node that does not define a separate radio cell is also called "type 2 relay node". The present invention is not limited to inband relaying. It can also be applied in connection with networks 11 that use different radio resources for communication between the base station 17 and the relaying node 21 and for communication between the relaying node 21 and a terminal, respectively. In particular, the present invention is not limited to type 2 relay nodes.

The network 11 shown in figure 1 has two relaying nodes 21. However, in different embodiments, the access network 11 may have one or more than two relay nodes. The relaying nodes 21 of the shown embodiment have a first transceiver 29 connected to four antennas 31 of the relaying node 21 so that the relaying node 21 can perform Multiple Input Multiple Output (MIMO) communication. The first transceiver 29 of each relaying node 21 has a first transmitter 33 for transmitting a radio signal over the radio link 25 and a first receiver 35 for receiving signals from the radio link 25.

First control circuitry 39 of the relaying node 21 is arranged for controlling the first transceiver 29 of the relaying node 21 in order to perform data communication with base station 17 and the terminals 23. In an embodiment, the first control circuitry 39 comprises a first processor 41 or microcomputer programmed for controlling the relay node 21 in particular the first transceiver 29.

The base station 17 has a second transceiver 43 comprising a second receiver 45 for receiving signals from the radio link 25 and a second transmitter 47 for transmitting signals to the radio link. In the shown embodiment, the base station 17 has only one antenna 31 connected to the second transceiver 43. However, in another embodiment, the base station 17 may have multiple antennas 31 for MIMO communication. In another embodiment, the relay node 21 has a different number of antennas.

The scheduler 27 is part of second control circuitry 49 of the base station 17. The second control circuitry 49 may comprise a second processor 51 or microcomputer programmed for controlling the base station 17, in particular the second transceiver 43. In another embodiment, the scheduler 27 corresponds to the second processor 51 which is programmed for performing scheduling operations of the scheduler 27.

As shown in Figure 1, each terminal 23 comprises a third transceiver 48 and third control circuitry 52 for controlling the terminal 23, in particular the third transceiver 48. In a preferred embodiment, the control circuitry 52 comprises a third processor 54, which is programmed for controlling the terminal 23.

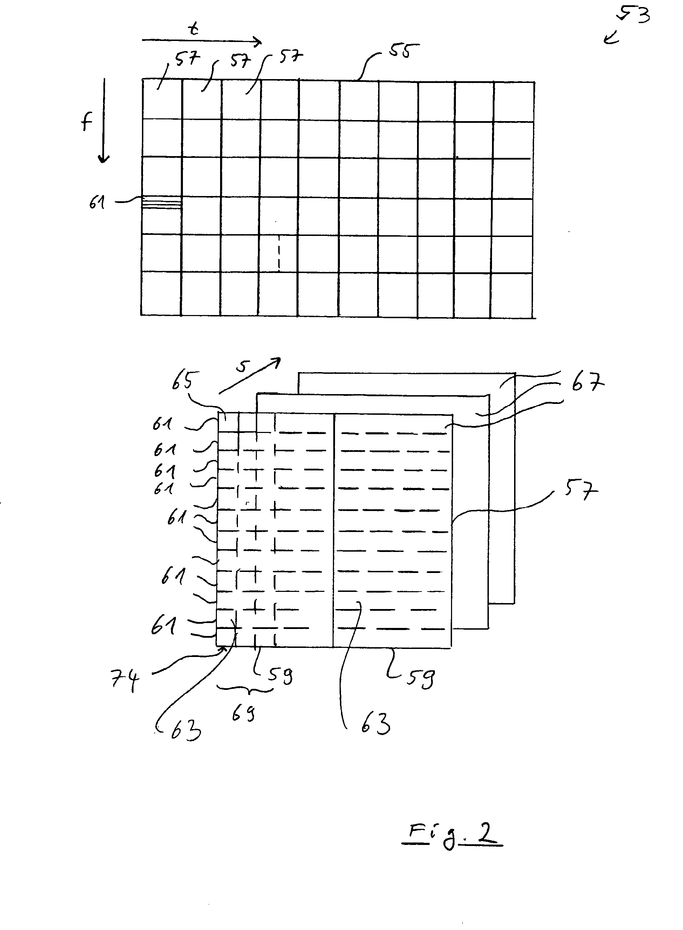

Figure 2 shows how radio resources 53 available for communication over the link 25 are organized. The radio resources 53 are subdivided according to three dimensions: Time t, frequency f and space s. The time is subdivided by consecutive radio frames 55. For the sake of simplicity, figure 2 shows only one radio frame 55, but when operating the network 11 there are many consecutive radio frames 55, wherein one radio frame 55 follows immediately after another radio frame 55.

As shown in figure 2, each radio frame 55 is subdivided by 10 subframes 57. Each subframe 57 is subdivided into two slots 59. In the shown embodiment, the duration of a single radio frame 55 is 10 milliseconds. Consequently, each subframe 57 takes 1 ms and each slot 59 takes 0.5 ms. In another embodiment, time is subdivided in a different way. For example, the duration of frames, the number of subframes 57 and/or slots 59 may be different than shown in figure 2.

Regarding the dimension of frequency f, the radio resources 53 are subdivided into subcarriers 61. Twelve consecutive subcarriers 61 transmitted during a time interval of one slot 59 are referred to as a resource block 63. Furthermore, a resource block 63 is subdivided into resource elements 65, wherein one resource element 65 consumes in the frequency dimension the resources of one subcarrier 61 and in the time dimension a time interval that corresponds to the duration of one OFDM symbol 74.

In particular, when performing MIMO communication, i.e. sending and/or receiving using multiple antennas 31, multiple resource elements 65 or resource blocks 63 are transmitted simultaneously using the same subcarrier 61. Therefore, the resource blocks 63 and/or the resource elements 65 transmitted simultaneously using the same subcarrier 61 but different antennas can be considered being assigned to different spatial layers 67. It should be noted that the dimension of space s is optional. If the network is not performing MIMO communication at all then only a single spatial layer 67 is present. In this case, the radio resources 53 are subdivided into time s and frequency f only.

According to the shown embodiment, Frequency Division Duplex (FDD) is applied. That is, the radio resources 53 shown in figure 2 are provided twice, i. e., in two separate frequency bands. One of these bands is dedicated for downlink transmissions and the other one is dedicated for uplink transmissions. Downlink transmissions are transmissions from the base station 17 to the relaying node 21 or the terminal 23 as well as from the relaying node 21 to the terminal 23. Uplink transmissions are transmissions from the terminal 23 to the base station 17 or to the relaying node 21 as well as transmissions from the relaying node 21 to the base station 17. In another embodiment, Time Division Duplex (TDD) is applied, i.e., the radio resources 53 depicted in figure 2 are provided only once in a single frequency band, wherein some of the subframes 57 are dedicated for downlink transmissions and some other subframes 57 are dedicated for uplink transmissions.

A certain number of OFDM symbols 74 starting from the beginning of each subframe 57 form a control channel region 69, at least some resource elements 71 of which are assigned to at least one control channel 70 for transmitting control information between the base station 17, the terminal 23 and/or the relaying node 21. In the shown embodiment, the control channel 70 is a Physical Downlink Control Channel (PDCCH) of LTE. According to figure 2 the control channel region 69 has three OFDM symbols 74. However, the numbers of OFDM symbols 74 of the control channel region 69 can be changed either statically by configuration or semi-statically according to network control and/or management procedures performed during the operation of the radio access network 11, or dynamically for each subframe 57 by means of control signaling. In LTE, control signaling for dynamically changing the number of OFDM symbols 74 of the control channel region 69 is carried out using a separated control channel, i. e. the so-called Physical Control Format Indicator Channel (PCFICH).

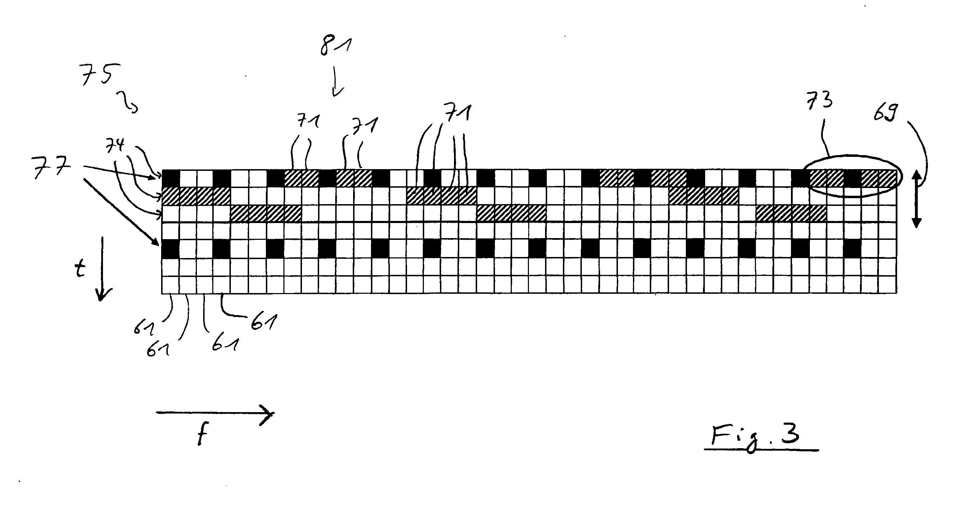

Figure 3 shows resource elements 71 assigned to a single control channel 70. The resource elements 65 allocated for the control channel 70 are referred to as control channel resource elements 71. A group of four control channel resource elements 71 belongs to a resource element group 73. All control channel resource elements 71 residing in the control channel region 69 of a single subframe 57 belong to the same control channel element 75 (CCE 75). In some cases, control channel resource elements 71 of multiple control channel elements 75 preferably of the same subframe 57 may be aggregated to form the control channel 70. Some resource elements 65 of the control channel region 69 are used for transmitting reference symbols 77 by the base station 17. The reference symbols 77 allow for detecting the base station 17 and to perform measurements of a radio link quality and to perform channel estimation. The terminals 23 may send measurement reports to the base station 17 in order to indicate results of the measurements.

According to preferred embodiment of the present invention, a part of the control channel resource elements 71 are selected for transmitting a pilot sequence 79. Within these selected control channel resource elements 81 the base station 17 does not send control channel information but one of the relaying nodes 21 is transmitting the pilot sequence 79. In a preferred embodiment, all control channel resource elements 71 of a defined subset of control channel elements 75 are selected as selected control channel resource elements (e.g. all control channel resource elements 71 depicted in figure 3). This pilot sequence 79 can be received by the terminals 23 in order to discover the relaying node 21, to perform link quality measurements of transmissions between the relaying node 21 and the terminal 23, and/or to estimate a channel between the relaying node 21 and the terminal 23.

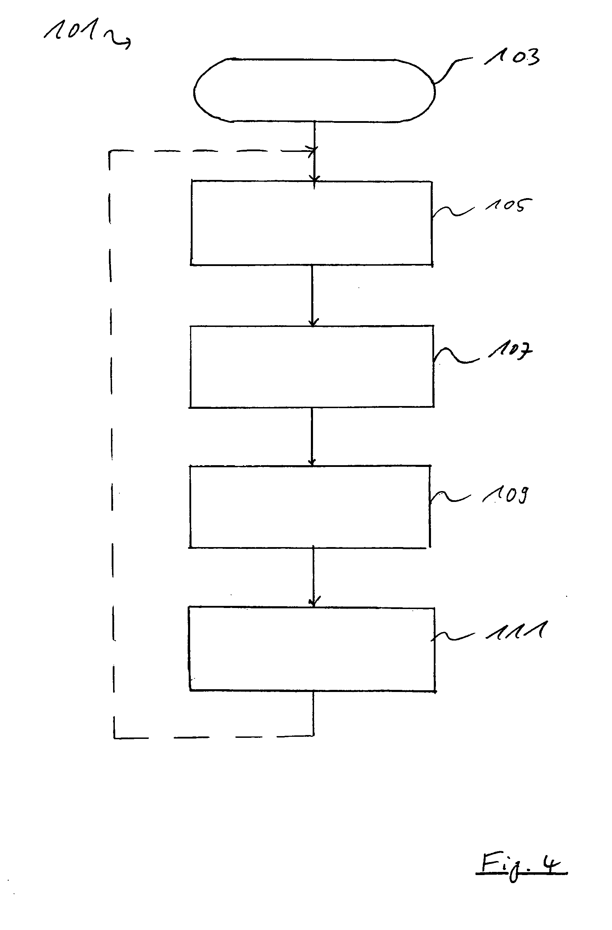

Figure 4 shows a flow chart of a method 101 performed by the relaying node 21. After a start 103 of the method 101, a step 105 is executed that receives signaling information from the base station 17. In a step 107 following the step 105, the relaying node 21 determines cell configuration information by analyzing the received signaling information. The cell configuration information includes mapping information which indicates which control channel resource elements 73 of a control channel are not used by the base station 17 and can therefore be selected for transmission of the pilot sequence 79. In case multiple relaying nodes 21 are present in the radio cell 15, the cell configuration information can further include information which relaying node 21 may use a certain control channel resource element 71 for transmitting the pilot sequence 79.

In an embodiment, the pilot sequence 79 comprises a bit sequence that may comprise an identifier of the relaying node 21 and/or the antenna 31 of the relaying node 21 that is transmitting the pilot sequence. The cell configuration information may comprise pilot sequence configuration information which specifies which bit sequence a certain relaying node 21 must include in the pilot sequence. For instance, the pilot sequence configuration information may comprise an identifier of the relaying node. The relaying node that has received this pilot sequence configuration information may then generate the bit sequence depending on this identifier. By transmitting different pieces of pilot sequence configuration information to different relaying nodes 21 the base station 17 may set up the relaying nodes 21 such that each relaying node 21 is transmitting pilot sequences 79 using different control channel resource elements 71, wherein these pilot sequences 79 comprise different bit sequences. The terminals 23 may differentiate between the pilot sequences by analyzing the bit sequences and/or by decoding the identifier present in the bit sequence.

The bit sequences for the control signaling may comprise an error protection code, e. g. a CRC code.. Terminals 23 that do not support receiving the pilot sequences 70 will fail in verifying the error protection code and discard received pilot sequences 79. Therefore, the method for transmitting the pilot sequence 79 is compatible with terminals 23 that do not support receiving the pilot sequences 79.

In a step 109, the relaying node 21 selects at least one control channel resource element 71 for transmitting the pilot sequence 79 depending on the cell configuration information determined in step 107.

In a step 111, the first transmitter 33 of the relaying node 21 transmits the pilot sequence 79 within at least one resource element 81 selected in step 109, preferably the relaying node 21 uses all selected resource elements 81 for transmission of the pilot sequence.

According to the embodiment as shown in figure 4, the method 101 jumps back to step 105 so that the steps 105, 107, 109 and 111 are executed repeatedly. However, in a different embodiment, the steps can also be executed at least to some extent in parallel. The steps 105 and 107, which acquire the cell configuration information, can be executed separately from the steps 109 and 111, which generate and transmit the pilot sequences 79. Furthermore, in an embodiment that uses static cell configurations, the steps 105 and 107 can be completely omitted.

As shown in figure 3, the control channel resource elements 71 are distributed in a frequency-diverse way over substantially the whole system bandwidth, i.e. at least at the most the whole range of the frequency dimension. Consequently, pilot sequences 79 transmitted within the selected control channel resource elements 81 cover at least almost the whole bandwidth. Thus, the terminal 23 that receives the pilot sequences 79 can perform signal quality measurement that cover at least almost the whole frequency range. In particular, the terminal 23 may measure a Signal-to-Inference plus Noise Ratio (SINR) for generating Channel Quality Indicator (CQI) reports that may be send by the terminal 23 uplink to the base station 17 and/or to the relaying node 21.

If the relaying node 21 has multiple transmit antennas 31, a pilot sequence 79 may be transmitted from each antenna 31. A terminal 23 receiving the different pilot sequences sent by different antennas 31 of the relaying node 21 can perform measurements related to a single path between a single antenna 31 of the relaying node 21 and the terminal 23. Based on these measurements, optimum pre-coding weights for multiple antenna transmission can be calculated. In an embodiment, calculating the pre-coding weights takes into account not only measurements regarding a path between the antennas 31 of the relaying node 21 and the terminal 23 but also considers measurements regarding a path between one or more antennas 31 of the base station 17 and the terminal 23. This enables efficient coordinated transmission between the base station 17 and the terminal 23 and the relaying node 21 and the terminal 23, respectively.

In case that the network 11 has multiple relaying nodes 21, the pilot sequences 79 sent by different relaying nodes 21 are transmitted within different selected control channel resource elements 81 in order to generate at least essentially orthogonal pilot sequences 79 which can be received and processed separately from each other by the terminals 23.

In an embodiment, control channel resource elements 71 residing within one subframe 57 of a sequence of subframes 57 are selected as selected resource elements 81 for transmitting the pilot sequence 79. Control channel resource elements 73 residing in different subframes 57 of the sequence are allocated for transmitting control channel information by the base station 17.

Preferably, these subframes containing only control channel resource elements 81 selected for transmission of the pilot sequence are chosen in such a way that the pilot sequence is transmitted with a defined frequency. I. e., the subframe 57 comprising the control channel resource element 71 selected for transmission of the pilot sequence 79 appears in the sequence of sub frames 57 with that frequency. In an embodiment, said frequency is semi-statically configurable, i.e. the frequency may be changed during the operation of the network 11 in time intervals that are larger than approximately 100 ms. In another embodiment, the frequency is statically configured, i.e. it does not change during the operation the network 11 or can only be change manually, whereas semi-statical modifications of the frequency may be performed automatically.

The base station 17 cannot transmit control channel information within control channel resource elements 71 that are used for transmitting the pilot sequence,. However, the base station 17 can still transmit data of a different type such as payload data within those subframes 57 because only the control channel resource elements 71 residing within the control region 69 of these subframes 57 are used for transmitting the pilot sequence 79, whereas the remaining resource elements 65 are at least partly available, e.g., for payload data transmissions. Furthermore, a single subframe 57 may comprise multiple control channel elements 75, which are separated from each other by frequency (FDM) and/or by time (TDM). In this case, one or more control channel elements 75 may be allocated for transmission of control channel information and not for transmission of the pilot sequence 79. However, it is possible to allocate all control channel elements 75 for transmission of the pilot sequence 79.

In the exemplary control channel element 75 shown in figure 3 consisting of nine resource element groups 73, each resource element group 73 having four consecutive control channel resource elements 71, 36 complex-valued OFDM symbols are available. A control channel element 75 is spread in a pseudo random manner over the frequency range of the radio resources 53. Depending on the state of the radio cell 15, in particular depending on radio conditions, multiple control channel elements 75 of the same subframe 75 can be aggregated. A group of aggregated control channel elements 75 may comprise two, three or four control channel elements 75.

In a radio cell 15, having eight relaying nodes 21, each relaying node having four antennas 31, 36 at least essentially orthogonal pilot sequences should be generated. A single control channel element 75 comprising 36 control channel resource elements 71 is therefore sufficient for transmitting all pilot sequences originating from the different antennas 31 of these eight relaying nodes 21.

In an embodiment, different pilot sequences 79 are transmitted within different control channel resource elements 71 of a single resource element group 73. For instance, each control channel resource element 71 of a single resource element group 73 can be allocated for transmitting a pilot sequence to be send via one antenna 31 of a relaying node 21 having multiple antennas 31, e.g. four antennas 31.

In another embodiment, multiple orthogonal pilot sequences are generated by multiplying a bit sequence representing data to be transmitted within the pilot sequence with a code sequence and transmitting the resulting sequence. When multiplying the bit sequences with different code sequences that are orthogonal to each other then the resulting pilot sequences are at least essentially orthogonal with respect to each other. For example, when the relaying node 21 has four transmit antennas 31, four orthogonal code sequences of length four are required. For example, Hadamard sequences can be applied.

In another embodiment, the different pilot sequences sent by different relaying nodes 21 and/or via different antennas 31 can be separated by means of time division multiplexing. For instance, to each pilot sequence a specific OFDM symbol 74 may be assigned. If the control channel region 69 comprises three OFDM symbols 74 than during one subframe 57 three pilot sequences 79 can be transmitted.

According another embodiment, separation of different pilot sequences 79 in the time dimension is performed by assigning a specific set of subframes 57 to a single pilot sequence. A single pilot sequence 79 is transmitted within the subframes 57 of a given set of subframes. When numbering the subframes 57 beginning from zero than a first set of subframes 57 may comprise the subframes 57 that have the number 0, 8, 16, etc. and a second set of subframes 57 may comprise the subframes 57 that have the numbers 1, 9, 17, etc.

In case of aggregated control channel elements 75, a first control channel element 75 may be used to transmit a pilot sequence of one specific relaying node 21 or a single antenna 31 of that relaying node 21. The control channel resource elements 71 of a second control channel element 75 of the same group of aggregated control channel elements 75 can be selected for transmitting a second pilot sequence 79 originating from a different antenna 31 and/or relaying node 21, etc. In other words, one control channel element 75 of a group of aggregated control channel elements 75 is used to transmit a certain pilot sequence 79 which is specific to a certain antenna 31 of the relaying node 21. Different control channel elements 75 are used transmit different pilot sequences 79. Preferably, all control channel elements 75 of said group of control channel elements 75 reside within the same subframe 57.

In order to avoid or reduce interference, in a preferred embodiment, the pilot sequences are scrambled with a scrambling code specific to a single relaying node 21 and/or specific to a single radio cell 15. A feedback shift register used for scrambling the pilot sequence may be initialized with a value depending on a identification of the relaying node 21 transmitting this pilot sequence and/or an identification of the radio cell 15 to which the relaying node 21 transmitting this pilot sequence is assigned to.

In another embodiment, resource element groups 73 are subdivided into multiple subbands of the radio resources 53, each subband comprising a certain number of consecutive subcarriers 61. A certain pilot sequence is transmitted within a single subband only. This allows for generating pilot sequences with a limited bandwidth and therefore for frequency-selective measurements and reports regarding radio conditions.

To sum up, the embodiments of the present invention described above use control channel resource elements 71 assigned to the control channel of the radio cell 15 in order to transmit pilot sequences 79 from an antenna 31 of a relaying node 21 to one or more terminals 23. The terminals 23 can perform measurements regarding the radio conditions of a radio link between each relay node 21 present in the radio cell 15 and a terminal 23 and transmit corresponding measurement reports to the base station 17.

## Claims

1. Method (101) for transmitting (111) at least one pilot sequence (79) over a radio communication link (25) of a radio cell (15) of a cellular communication network (11) from a relaying node (21) assigned to a base station (17) of the cell (15), radio resources (53) of the link (25) being subdivided with respect to frequency (f) and time (t) into multiple resource elements (65), one or more of said resource elements (65) being assigned to a control channel (70) of the link (25), wherein the method (101) comprises:
- selecting (109) at least one of said resource elements (71) assigned to said control channel (70) as a selected resource element (81) for transmitting said one pilot sequence and
- transmitting (111) the pilot sequence within the at least one selected resource element (81).

2. Method (101) according to claim 1, wherein multiple resource elements (71) form a control channel element (75) assigned to the control channel and wherein the resource elements (71) of the control channel element (75) are selected (109) for transmitting the pilot sequence (79).

3. Method (101) according to claim 2, wherein a control channel element (75) is subdivided into multiple resource element groups (73), each resource element group (83) having multiple resource elements (69) and wherein at least one specific resource element (81) of the resource element group (73) is selected for transmitting the pilot sequence (79).

4. Method (101) according to one of the precedent claims, wherein the radio resources (53) of the link (25) are further subdivided with respect to space (s), the method (101) comprises transmitting (111) multiple pilot sequences (79) simultaneously, transmitting (111) of one pilot sequence (79) comprising multiplying the pilot sequence (79) with a code sequence that is specific to the pilot sequence (79) so that the simultaneously transmitted pilot sequences (79) are at least substantially orthogonal with respect to each other.

5. Method (101) according to one of the precedent claims, comprising transmitting multiple pilot sequences (79), wherein the control channel comprises multiple control channel elements (75) and wherein the resource elements (73) of a specific control channel element are selected (109) for transmission of one of said multiple pilot sequences (79).

6. Method (101) according to one of the precedent claims, wherein the resource elements (65) are selected for transmission of the pilot sequence (79) according to a transmission time of the resource element (65).

7. Method (101) according to one of the precedent claims, comprising scrambling the pilot sequence (79), the scrambling being specific to the radio cell (15) and/or the relaying node (21).

8. Method (101) according to one of the precedent claims, comprising receiving (105) signaling information signaled by the base station (17) to the relaying node (21), determining a cell configuration based on the received signaling information and selecting (109) resource elements (65) for transmitting the pilot sequence (79) according to the cell configuration.

9. Method (101) according to one of the precedent claims, comprising sending multiple pilot sequences (79) by a single relaying node, wherein each pilot sequence is sent via a different antenna (31) of the relaying node (21).

10. Method (101) according to one of the precedent claims, wherein the control channel corresponds to a physical downlink control channel of a mobile communication system (13), preferably the Long Term Evolution system.

11. Relaying node (21) of a cellular communication network, for transmitting at least one pilot sequence (79) over a radio communication link (25) of a radio cell (15) of the cellular communication network (11), radio resources (53) of the link being subdivided with respect to frequency (f) and time (t) into multiple resource elements (65), and one or more of said resource elements (65) being assigned to a control channel (70) of the link (25), wherein the relaying node (21) comprises:
- control circuitry (39) that is configured for selecting (109) at least one of said resource elements (65) assigned to said control channel (70) as a selected resource element (81) for transmitting said one pilot sequence (79) and
- a transmitter (33) arranged for transmitting (111) the pilot sequence (79) within the at least one selected resource element (81).

12. Relaying node (21) according to claim 11, wherein the radio resources (53) of the radio link are further subdivided with respect to space (s) and/or the relaying node (21) comprises multiple antennas (31), wherein each antenna (31) is arranged for transmitting one pilot sequence (79).

13. Relaying node (21) according to claim 11 or claim 12, wherein the control circuitry (39) is arranged, preferably programmed, for executing a method according to one of claims 1 to 10.

14. Base station (17) of a cellular communication network (11), said network (11) comprising a relaying node (21) for transmitting at least one pilot sequence (79) over a radio communication link (25) of a radio cell (15) of the cellular communication network (11), radio resources (53) of the link being subdivided with respect to frequency (f) and time (t) into multiple resource elements (65), one or more of said resource elements (65) being assigned to a control channel (70) of the link (25), the relaying node (21) being arranged for selecting (109) at least one of said resource elements (65) as a selected resource element (81) assigned to said control channel (70) for transmitting one pilot sequence (79) and transmitting (111) the pilot sequence (79) within the at least one selected resource element (81), the base station (17) comprising a transmitter (47) for transmitting control channel data within at least some of the resource elements (71) assigned to the control channel, wherein the transmitter (47) is arranged for preventing transmissions of control channel data within each selected resource element (81) or for reducing a transmission power of transmissions of control channel data within each selected resource element (81).

15. Base station (17) according to claim 14, wherein the base station (17) is arranged for sending signaling information to the relay node (21), the signaling information indicating to the relay node (21) which resource elements (65) must be selected as selected resource elements (81).

## Amended claims

### Amended claims in accordance with Rule 137(2) EPC.

**1.** Method (101) for operating a relaying node (21) comprising transmitting (111) at least one pilot sequence (79) over a radio communication link (25) of a radio cell (15) of a cellular communication network (11) from a relaying node (21) assigned to a base station (17) of the cell (15), radio resources (53) of the link (25) being subdivided with respect to frequency (f) and time (t) into multiple resource elements (65), one or more of said resource elements (65) being assigned to a control channel (70) of the link (25), **characterized in that** the method (101) comprises:
- selecting (109) at least one of said resource elements (71) assigned to said control channel (70) as a selected resource element (81) for transmitting said one pilot sequence and
- transmitting (111) the pilot sequence within the at least one selected resource element (81).

**2.** Method (101) according to claim 1, wherein multiple resource elements (71) form a control channel element (75) assigned to the control channel and wherein the resource elements (71) of the control channel element (75) are selected (109) for transmitting the pilot sequence (79).

**3.** Method (101) according to claim 2, wherein a control channel element (75) is subdivided into multiple resource element groups (73), each resource element group (83) having multiple resource elements (69) and wherein at least one specific resource element (81) of the resource element group (73) is selected for transmitting the pilot sequence (79).

**4.** Method (101) according to one of the precedent claims, wherein the radio resources (53) of the link (25) are further subdivided with respect to space (s), the method (101) comprises transmitting (111) multiple pilot sequences (79) simultaneously, transmitting (111) of one pilot sequence (79) comprising multiplying the pilot sequence (79) with a code sequence that is specific to the pilot sequence (79) so that the simultaneously transmitted pilot sequences (79) are at least substantially orthogonal with respect to each other.

**5.** Method (101) according to one of the precedent claims, comprising transmitting multiple pilot sequences (79), wherein the control channel comprises multiple control channel elements (75) and wherein the resource elements (73) of a specific control channel element are selected (109) for transmission of one of said -multiple pilot sequences (79).

**6.** Method (101) according to one of the precedent claims, wherein the resource elements (65) are selected for transmission of the pilot sequence (79) according to a transmission time of the resource element (65).

**7.** Method (101) according to one of the precedent claims, comprising scrambling the pilot sequence (79), the scrambling being specific to the radio cell (15) and/or the relaying node (21).

**8.** Method (101) according to one of the precedent claims, comprising receiving (105) signaling information signaled by the base station (17) to the relaying node (21), determining a cell configuration based on the received signaling information and selecting (109) resource elements (65) for transmitting the pilot sequence (79) according to the cell configuration.

**9.** Method (101) according to one of the precedent claims, comprising sending multiple pilot sequences (79) by a single relaying node, wherein each pilot sequence is sent via a different antenna (31) of the relaying node (21).

**10.** Method (101) according to one of the precedent claims, wherein the control channel corresponds to a physical downlink control channel of a mobile communication system (13), preferably the Long Term Evolution system.

**11.** Relaying node (21) of a cellular communication network, for transmitting at least one pilot sequence (79) over a radio communication link (25) of a radio cell (15) of the cellular communication network (11), radio resources (53) of the link being subdivided with respect to frequency (f) and time (t) into multiple resource elements (65), and one or more of said resource elements (65) being assigned to a control channel (70) of the link (25), **characterized in that** the relaying node (21) comprises:
- control circuitry (39) that is configured for selecting (109) at least one of said resource elements (65) assigned to said control channel (70) as a selected resource element (81) for transmitting said one pilot sequence (79) and
- a transmitter (33) arranged for transmitting (111) the pilot sequence (79) within the at least one selected resource element (81).

**12.** Relaying node (21) according to claim 11, wherein the radio resources (53) of the radio link are further subdivided with respect to space (s) and/or the relaying node (21) comprises multiple antennas (31), wherein each antenna (31) is arranged for transmitting one pilot sequence (79).

**13.** Relaying node (21) according to claim 11 or claim 12, wherein the control circuitry (39) is arranged, preferably programmed, for executing a method according to one of claims 1 to 10.

**14.** Base station (17) of a cellular communication network (11), said network (11) comprising a relaying node (21) for transmitting at least one pilot sequence (79) over a radio communication link (25) of a radio cell (15) of the cellular communication network (11), radio resources (53) of the link being subdivided with respect to frequency (f) and time (t) into multiple resource elements (65), one or more of said resource elements (65) being assigned to a control channel (70) of the link (25), the relaying node (21) being arranged for selecting (109) at least one of said resource elements (65) as a selected resource element (81) assigned to said control channel (70) for transmitting one pilot sequence (79) and transmitting (111) the pilot sequence (79) within the at least one selected resource element (81), the base station (17) comprising a transmitter (47) for transmitting control channel data within at least some of the resource elements (71) assigned to the control channel, **characterized in that** the transmitter (47) is arranged for preventing transmissions of control channel data within each selected resource element (81) or for reducing a transmission power of transmissions of control channel data within each selected resource element (81).

**15.** Base station (17) according to claim 14, wherein the base station (17) is arranged for sending signaling information to the relay node (21), the signaling information indicating to the relay node (21) which resource elements (65) must be selected as selected resource elements (81).
